# EUROPÄISCHE PATENTSCHRIFT

(11) **EP 1 526 419 B1**
(45) Veröffentlichungstag und Bekanntmachung des Hinweises auf die Patenterteilung: **23.02.2011**
(21) Anmeldenummer: 04024887.4
(22) Anmeldetag: 20.10.2004
(51) Int. Cl.: G05B 19/042, B25J 9/16

(54) **Verfahren zum Bestimmen und Bereitstellen von Laufzeitinformationen für Roboter-Steuerprogramme**
Method for determining and providing runtime information for robot control programs
Procédé pour déterminer et fournir des informations sur les temps d'exécution de programmes de commande pour robots

(30) Priorität: 23.10.2003 DE 10349349
(43) Veröffentlichungstag der Anmeldung: 27.04.2005
(73) Patentinhaber: KUKA Roboter GmbH, 86165 Augsburg (DE)
(72) Erfinder: Grob, Franz, 86156 - Augsburg (DE)
(74) Vertreter: Schlotter, Alexander Carolus Paul

(56) Entgegenhaltungen:
- EP-A1- 0 639 808
- DE-A1- 4 013 960
- YAMANOBE N ET AL: "Designing of damping control parameters for peg-in-hole considering cycle time" ROBOTICS AND AUTOMATION, 2004. PROCEEDINGS. ICRA '04. 2004 IEEE INTERN ATIONAL CONFERENCE ON NEW ORLEANS, LA, USA APRIL 26-MAY 1, 2004, PISCATAWAY, NJ, USA,IEEE, US, 26. April 2004 (2004-04-26), Seiten 1129-1134VOL.2, XP010768794 ISBN: 978-0-7803-8232-9
- GONZALEZ HARBOUR M ET AL: "Response time analysis for tasks scheduled under EDF within fixed priorities" PROCEEDINGS OF THE 24TH. IEEE REAL-TIME SYSTEMS SYMPOSIUM.(RTSS 2003). CANCUN, MEXICO, DEC. 3 - 5, 2003; [IEEE REAL-TIME SYSTEMS SYMPOSIUM], LOS ALAMITOS, CA : IEEE COMP. SOC, US, 3. Dezember 2003 (2003-12-03), Seiten 200-209, XP010674249 ISBN: 978-0-7695-2044-5

## Beschreibung

Die Erfindung betrifft ein Verfahren zum Bereitstellen von Laufzeitinformationen für Computerprogramme zum Steuern von Industrierobotern.

Zum Steuern von Industrierobotern werden in der Regel programmierbare Steuerungseinheiten verwendet, die derart ausgebildet sind, dass auf ihnen anwendungs- bzw. anwenderspezifische Computerprogramme zum Steuern von Industrierobotern (Roboter-Steuerprogramme) ablaufen können. Solche Steuerprogramme werden gewöhnlich durch einen Anwender, einen Roboterprogrammierer, erstellt und enthalten eine Reihe von Einzelbefehlen oder Folgen von Einzelbefehlen in Form von Prozeduren oder Unterprogrammen, über die im Rahmen einer Bewegungssteuerung auf die Motorik des Roboters eingewirkt wird. Insbesondere umfassen die Einzelbefehle und die aus diesen aufgebauten Unterprogramme arithmetische Ausdrücke, logische Ausdrücke, Bewegungsanweisungen, Warteanweisungen oder dergleichen, durch die sich das Bewegungsverhalten des Roboters in Abhängigkeit von den auszuführenden Tätigkeiten steuern lässt.

Es ist allgemein bekannt, dass beim Ausführen von Computerprogrammen nicht alle in diesen enthaltene Einzelbefehle bzw. Unterprogramme einen gleichen Anteil an der gesamten Programmlaufzeit beanspruchen. Dies hängt zum einen mit der unterschiedlichen Häufigkeit des Aufrufens bestimmter Befehle oder Unterprogramme zusammen, zum anderen jedoch auch mit deren interner Komplexität, die einerseits inhärent gegeben sein, beispielsweise bei bestimmten arithmetischen Operationen wie Wurzeloperationen, andererseits aber auch aus einer fehlerhaften oder nicht optimalen Programmierung resultieren kann. Insbesondere bei der Steuerung von Industrierobotern, die dazu eingesetzt werden, wiederholte, hochpräzise Bewegungsabläufe mit höchstmöglicher Geschwindigkeit zu durchfahren, ist es daher erwünscht, derartige Engpässe und Schwachstellen der Programmierung effizient aufzufinden und auszuschalten.

Es ist zum diesem Zweck bekannt, die Laufzeit von Roboter-Steuerprogrammen mit einer externen Uhr zu messen. Das Ergebnis einer solchen Messung ist jedoch verfahrensbedingt nur sehr ungenau und darüber hinaus wenig detailliert, da von außen in der Regel nicht erkennbar ist, in welchem konkreten Einzelbefehl oder Unterprogramm sich die Robotersteuerung beim Ausführen des auf ihr ablaufenden Steuerprogramms gerade befindet. Alternativ wurde vorgeschlagen, das zu überprüfende Roboter-Steuerprogramm um zusätzlichen Programmcode für eine Zeitmessung zu erweitern. Derartiger zusätzlicher Programmcode umfasst insbesondere Zeitnehmer/-geber im Programm oder ein Setzen/Rücksetzen von Ausgängen verbunden mit einer Messung der entsprechenden Ausgangssignale. Dabei hat sich insbesondere als nachteilig herausgestellt, dass durch das Einfügen von zusätzlichem Programmcode in das Roboter-Steuerprogramm das zu bestimmende Zeitverhalten des Roboter-Steuerprogramms an sich verändert wird, so dass durch die erhaltenen Messergebnisse keine eindeutige Aussage über das tatsächliche Laufzeitverhalten des überprüften Roboter-Steuerprogramms möglich ist.

Von EP 0 639 808 ist ein System bekannt, dass die Laufzeit von Einzelbefehlen eines Computerprogramms zum Steuern von CNC Maschinen ermittelt. Dennoch, benutzt EP 0 639 808 zusätzlichen Programmcode zur Messung der Laufzeit des Computersprogramms. Durch das Einfügen von zusätzlichen Programmcode in das Steuerprogramm wird das zu bestimmende Zeitverhalten an sich verändert, was zu Verfälschungen des Laufzeitverhaltens führen kann.

Der Erfindung liegt ausgehend von den vorstehend genannten Nachteilen die Aufgabe zugrunde, ein Verfahren zum Bereitstellen von Laufzeitinformationen für Computerprogramme zum Steuern von Industrierobotern der Art zu schaffen, dass Laufzeitmessungen an dem Roboter-Steuerprogramm ohne Verfälschung des Laufzeitverhaltens desselben bei möglicher genauer Zuordnung von Codeabschnitten des Roboter-Steuerprogramms zu den durchgeführten Zeitmessungen möglich sind.

Diese Aufgabe wird bei einem Verfahren der eingangs genannten Art dadurch gelöst, dass die Zeit der Ausführung mindestens eines Einzelbefehls aufgrund der Systemzeit des Prozessors, auf dem das Programm ausgeführt wird, bestimmt und zusammen mit dem Einzelbefehl oder die Einzelbefehle charakterisierenden Informationen gespeichert wird.

Mehrere Einzelbefehle beinhalten eine Folge von Einzelbefehlen im Sinne eines Unterprogramms, insbesondere auch mit einer gewissen Rekursionstiefe. Soweit im Folgenden von System gesprochen wird, wird hierunter der Mikroprozessor eines Rechners verstanden. Die Systemzeit beinhaltet eine durch den Prozessor gegebene (relative) Zeit, wie eine durch einen Taktgeber, insbesondere durch den Prozessortakt des Taktgebers (Timer) des Steuerwertes des Prozessors.

Gemäß bevorzugter Ausgestaltungen der Erfindung ist vorgesehen, dass der Zeitpunkt des Zugriffs auf einen dem mindestens einen Einzelbefehl zugeordneten Speicherbereichs eines Speichers und der Zeitpunkt der Beendigung des Zugriffs auf den Speicherbereich bestimmt und mit den mindestens einen Einzelbefehl charakterisierenden Informationen gespeichert wird und/oder dem mindestens einen Einzelbefehl zugeordneter Speicherbereich, charakterisierende Information mit der Zeit der Ausführung des mindestens einen Einzelbefehls gespeichert wird.

Eine konkrete Weiterbildung der Erfindung sieht vor, dass nach Aufruf und vor Ausführung eines Einzelbefehls oder einer Folge von Einzelbefehlen (Unterprogramm) ein Zeitpunkt eines Zugriffs auf einen dem Einzelbefehl oder dem Unterprogramm zugeordneten Bereich eines Programmspeichers eines das Programm ausführenden Computersystems in Form einer ersten Systemzeit durch das Computersystem selbst bestimmt wird, anschließend der Einzelbefehl oder das Unterprogramm ausgeführt wird und nach der Ausführung bei Beendigung des Zugriffs auf den zugeordneten Speicherbereich eine zweite Systemzeit des Computersystems durch dieses selbst bestimmt wird.

Erfindungsgemäß ermöglicht das Verfahren eine Protokollierung der Ausführungszeiten von Einzelbefehlen und/oder Unterprogrammen eines ablaufenden Roboter-Steuerprogramms, ohne dass es zu Laufzeiteinbußen durch zusätzliche Befehle im Programm selbst kommt. Das Roboter-Steuerprogramm braucht für die Laufzeitmessung nach dem vorgeschlagenen Verfahren nicht durch zusätzliche Befehle verändert zu werden. Weiterhin kommt es durch den Einsatz des erfindungsgemäßen Verfahrens auch nicht zu einer Taktzeitverschlechterung im Rahmen des Messvorgangs, da der Interpreter, d.h. das zum Übersetzen des in der Regel in einer höheren Programmiersprache formulierten Steuerprogramm-Quellcodes in die Maschinensprache dienende Programm die genannten Einzelbefehle bzw. Unterprogramme im Zuge der Programmausführung ohnehin abarbeiten muss, so dass die Zugriffszeiten hieraus direkt ableitbar sind. Durch das Speichern von Anfangs- und End-Systemzeit wird erfindungsgemäß lediglich implizit die Zeitdauer für das Ausführen des Einzelbefehls bzw. Unterprogramms festgehalten, wobei die Dauer des Speichervorgangs in Relation zur zeitlichen Dauer des Befehls bzw. Unterprogramms nicht ins Gewicht fällt.

Um für eine nachfolgende Auswertung der Laufzeit-Messergebnisse eine eindeutige Zuordnung zwischen den Messergebnissen und dem zugeordneten Einzelbefehl bzw. Unterprogramm des Roboter-Steuerprogramms zu ermöglichen, sieht eine bevorzugte Weiterbildung des erfindungsgemäßen Verfahrens vor, dass zusätzlich die den Einzelbefehl oder das Unterprogramm identifizierende Speicheradresse gespeichert wird. Beispielsweise ist im Verlauf der Ausführung eines Roboter-Steuerprogramms anhand von Zugriffen auf den Programm-Stapelspeicher (Programmstack), in dem unter anderem die zugehörigen Rücksprungadressen abgelegt sind, der Aufruf eines Einzelbefehls oder Unterprogramms ableitbar.

Da ein Unterprogramm sich per definitionem aus einer Reihe von Einzelbefehlen zusammensetzt, ist es insbesondere möglich, dass ein Unterprogramm einen Befehl enthält, durch den es sich selbst rekursiv in geschachtelter Form (teilweise) wieder aufruft, z.B. in Form einer Schleife, oder dass ein erstes Unterprogramm ein zweites, anderes Unterprogramm aufruft. Die Anzahl derart geschachtelter Aufrufe wird als Rekursionstiefe bezeichnet. Um anschließend bei einer Auswertung aus der gemessenen (Gesamt-)Laufzeit für ein rekursives Unterprogramm auf die tatsächliche Dauer einer einzelnen Ausführung dieses Unterprogramms zurück schließen zu können, ist nach einer bevorzugten Weiterbildung des erfindungsgemäßen Verfahrens vorgesehen, dass für Unterprogramme zusätzlich ein Wert einer Rekursionstiefe bestimmt wird. Somit lässt sich aus der Differenz der bestimmten Systemzeiten in Verbindung mit der Rekursionstiefe die tatsächliche Laufzeit des Unterprogramms errechnen.

Um die durch das erfindungsgemäßen Verfahrens gewonnenen Laufzeit-Messergebnisse zum einen dauerhaft zu sichern und sie zum anderen auch einer späteren ggf. externen Auswertung zugänglich zu machen, kann vorgesehen sein, dass die bestimmten Systemzeiten und/oder die zugehörigen Speicheradressen und/oder die Rekursionstiefen-Werte in einem nicht flüchtigen Speicher abgelegt werden. Zum Einsatz kommen können insbesondere Floppy-Disks, Festplatten, Zip-Disketten, über ein TCP/IP-Netz ansprechbare Log-Laufwerke, Flashcards, Memorysticks bzw. die entsprechenden Einrichtung bei einem Log-Server über ein TCP/IP-Netz. Zusätzlich oder alternativ ist jedoch auch der Einsatz eines flüchtigen RAM-Speichers möglich.

Nach einer äußerst bevorzugten Weiterbildung des erfindungsgemäßen Verfahrens ist vorgesehen, dass die gespeicherten Systemzeiten und/oder Speicheradressen und/oder Rekursionstiefen-Werte durch eine den genannten aufgezeichneten Daten nachgeschaltete Programmeinheit zu Optimierungszwecken für das Roboter-Steuerprogramm verwendet werden. Im Zuge der Optimierung kann dabei weiterhin vorgesehen sein, dass durch die Programmeinheit Vorschläge zu einer Umgestaltung des Roboter-Steuerprogramms ausgegeben und/oder automatisch umgesetzt werden. Beispielsweise kann die genannte Programmeinheit dahingehend ausgebildet sein, dass sie nach verschiedenen Auswahlkriterien, wie z.B. Laufzeitmaxima, Unterprogrammen, Bewegungsbefehlen, I/O-Befehlen, Warteanweisungen usw. einem Anwender Vorschläge zur möglichen Optimierung, vorzugsweise in graphischer Form, unterbreitet. In Verbindung mit geeigneten Expertensystemen oder dergleichen ist jedoch auch die bereits genannte automatische Umsetzung derartiger Optimierungsvorschläge möglich.

Weitere Eigenschaften und Vorteile der Erfindung ergeben sich aus der nachfolgenden Beschreibung eines Ausführungsbeispiels anhand der Zeichnung. Es zeigt:
- Fig. 1: den Ablauf einer Laufzeitbestimmung nach dem erfindungsgemäßen Verfahren; und
- Fig. 2: eine im Zuge des erfindungsgemäßen Verfahrens zu Optimierungszwecken ausgegebene graphische Darstellung der Laufzeit-Messergebnisse.

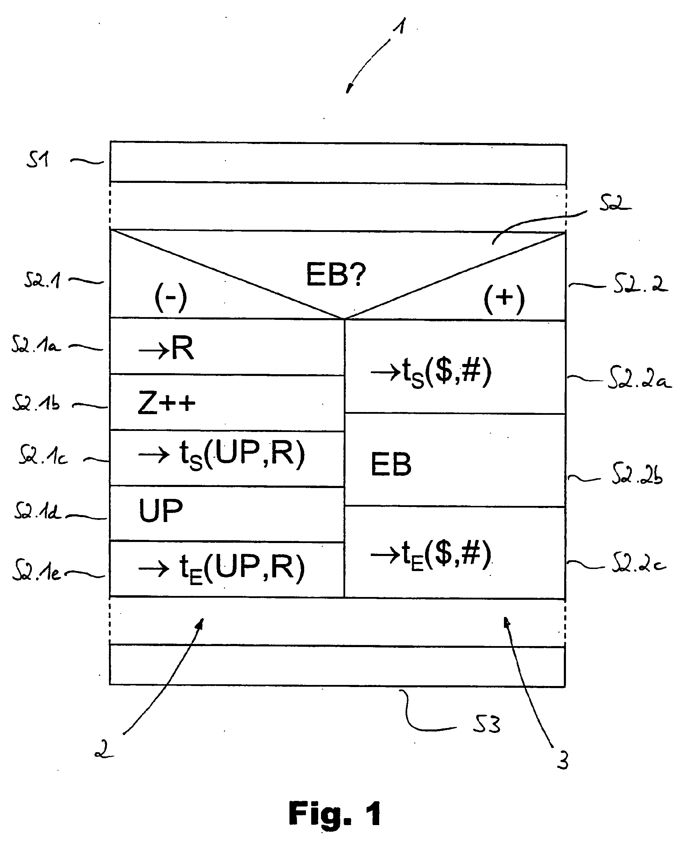

Die Fig. 1 zeigt ein Ablaufdiagramm des erfindungsgemäßen Verfahrens in Form eines Struktogramms. Das dargestellte Laufzeit-Messprogramm arbeitet systemintern auf der Ebene der Anwenderprogrammierung und stellt auf diese Weise Informationen über den Programmablauf ohne aktives Zutun des Programmierers bereit. Bei dem Laufzeitprogramm 1 handelt es sich erfindungsgemäß um einen Interpreter, welcher jeweils mittels einer zentralen Routine 2, 3 für Unterprogramme bzw. Einzelbefehle die für eine Laufzeitbestimmung erforderlichen Daten (Programmname, Satznummer, Rekursionstiefe, Systemzeiten, ...; s.u.) erfasst.

Der Programmablauf startet in Schritt S1, auf den ggf. weitere Programmschritte folgen können, wie in Fig. 1 durch die vertikalen gestrichelten Linien angedeutet ist. In Schritt S2 erfolgt eine Fallunterscheidung dahingehend, ob es sich bei dem im Zuge der Abarbeitung eines Roboter-Steuerprogramms auszuführenden Befehl um einen Einzelbefehl EB handelt oder nicht. Wenn kein Einzelbefehl EB vorliegt (Schritt S2.1), so erfolgt die erfindungsgemäße LaufzeitMessung an einem Unterprogramm UP. Zu diesem Zweck wird erfindungsgemäß eine Variable Z für einen Zähler definiert, deren Wert angibt, wie oft das Unterprogramm UP ausgeführt wurde. Eine weitere Variable R bezeichnet die Rekursionstiefe des Unterprogramms UP, d.h. die Anzahl der geschachtelten Aufrufe, wobei ein Wert R=0 bedeutet, dass der aktuelle Aufruf des Unterprogramms UP nicht aus der Prozedur/dem Unterprogramm selbst erfolgte. Weiterhin definiert sind Variablen t_{S}, t_{E} für die Systemzeiten zu Beginn bzw. am Ende der Ausführung des Unterprogramms UP. Die horizontalen Pfeile in Fig. 1 symbolisieren ein Abspeichern der entsprechenden Werte für die rechts vom Pfeil angegebenen Variablen auf einem geeigneten Speichermedium, wie einem RAM, einer Floppy-Disk, Festplatte, Zip-Diskette oder einem Memorystick bzw. den entsprechenden Einrichtungen eines LOG-Rechners über ein TCP/IP-Netz. Die Symbole "$" und "#" bezeichnen Programmnamen (Bezeichnungen von Unterprogrammen) in Form von alpha-nummerischen Zeichenketten bzw. Satznummern eines Roboter-Steuerprogramms. Die Satznummer gibt die Position (Zeile) eines Befehls (Unterprogramm oder Einzelbefehl) innerhalb eines Unterprogramms an.

Bei jedem Unterprogrammaufruf führt die zentrale interne Routine 2 im Interpreter 1 die Umschaltung des Kontexts (Prozessumgebung) von einem Programm zum anderen aus. Bei den genannten Programmen kann es sich um das Hauptprogramm oder ein Unterprogramm handeln. Bei Rückkehr aus dem Unterprogramm UP wird dieselbe Routine 2 zu Ende durchlaufen. Der Interpreter 1 kennt somit bei der Umschaltung jedes Unterprogramm UP über dessen Namen und kann letztendlich einen kompletten sogenannten Stacktrace durchführen, d.h. die ganze Aufrufhierarchie der Unterprogramme ist bekannt. Die Systemzeiten für Beginn (tₛ) und Ende (t_{E}) des Unterprogramms UP werden nach Ende der Kontextumschaltung bzw. vor Beginn der Kontextrücksicherung (Rücksprungadresse des Unterprogramms UP) festgehalten. Ausführender Unterprogrammname und Aufrufer nebst einer Satznummer, von der aus das Unterprogramm UP angesprungen wird, sind bekannt und werden mit den Systemzeiten für Beginn und Ende des Unterprogramms (tₛ, t_{E}) abgespeichert. Die Satznummer gibt die Position (Zeile) eines Befehls (Unterprogramm oder Einzelbefehl) innerhalb eines Unterprogramms an.

### Beispiel:

```
 Programm P1 ruft UP1 auf; in UP1 wird UP2 aufgerufen.
 
 
 DEF P1()
 UP1()
 END
 
 
 DEF P1()
 UP2()
 END
 
 
 DEF UP2()
 ; Programm anhalten, um den Stracktrace anzeigen zu können.
 HALT
 END
```

Wird die Ausführung des Roboterprogramms in UP2 angehalten, so ist auf dem Interpreterstack die Aufrufhierarchie P1()->UP1()->UP2() erkennbar und somit eindeutig zuzuordnen. Die Systemzeit wird jeweils bei Eintritt und Verlassen des Unterprogramms bestimmt.

Bei Einzelbefehlen sind der (Unter-)Programmname des Aufrufers und die Satznummer des Einzelbefehls im Unterprogramm bekannt. So wie es für die Ausführung von Unterprogrammen UP eine zentrale interne Routine 2 im Interpreter 1 gibt, existiert eine entsprechende Routine 3 im Interpreter 1 zur Abarbeitung von Einzelbefehlen EB. Diese Routine 3, der sogenannte Satzinterpreter, ordnet dem Einzelbefehl, der über (Unter-)Programmname und Satznummer eindeutig identifiziert ist, eine Systemzeit zu. Nach Abarbeitung des Satzinterpreters 3 wird die Satznummer im (Unter-)Programm um 1 erhöht und der Satzinterpreter 3 erneut aufgerufen, um den nächsten (Einzel-)Befehl abzuarbeiten.

Die Rekursionstiefe R gibt an, wie oft ein Programm sich selbst aufgerufen hat, um die jeweilige Ausführungszeit eindeutig zuordnen zu können. Der Programmname "$" und die Satznummer "#" allein reichen nicht mehr aus, da mit diesen Angaben keine eindeutige Zuordnung der Ausführungszeit zum Programmnamen mehr getroffen werden kann, wenn mehrere Aufrufe des gleichen Unterprogramms aktiv sind. Die Laufzeitbestimmung wird für jede Rekursionstiefe R durchgeführt, um die Gesamtdauer sowie die einzelne Ausführungsdauer für jede Rekursionstiefe R zur Verfügung zu haben.

### Beispiel:

```
 DEF P1()
 INT A; ganze Zahl A
 A=FAKULTAET(5)
 END
 
 
 DEF FAKULTAET (INT F)
 IF F>1 THEN
 RETURN (F*FAKULTAET(F-1)); verschalteter Aufruf von UP
 "Fakultät"
 ENDIF
 
 
 RETURN (1)
 END


 Aufrufhierarchie (Unterprogramm FALKUTAET hier kurz mit F
 bezeichnet):
 F(5)->F(4)->F(3)->F(2)->F(1)
 
 
 Rekursionstiefe R:
 0    1    2    3    4
 
 
 Auführungsdauer [µs]:
 9    7    5    3    1
 
 
 Delta Auführungsdauer [µs]:
   2     2     2     2
```

Im Beispiel beträgt die Gesamtdauer für die Berechnung der Fakultät 9 µs, eine einfache Berechnung dauert jeweils 2 µs, und auf unterster Ebene benötigt Fakultät 1 µs, da FAKULTAET(1) am schnellsten berechenbar ist (der Returnwert 1 wird zurückgegeben).

Zunächst wird erfindungsgemäß in Schritt S2.1a der Wert R für die Rekursionstiefe des Unterprogramms UP gespeichert. Anschließend wird in Schritt S2.1b der Zähler Z inkrementiert, der angibt, wie oft das Unterprogramm ausgeführt wurde. Dabei steht die Notation "Z++" für eine Erhöhung des Zählerwertes um 1, d.h. Z -> Z + 1. Daraufhin wird in Schritt S2.1c eine Anfangs-Systemzeit tₛ für die Ausführung des Unterprogramms UP gespeichert. Die Notation "(...)" gibt an, dass das Abspeichern in Abhängigkeit von der Art des Unterprogramms UP und der Rekursionstiefe R geschieht. Anschließend erfolgt in Schritt S2.1d die eigentliche Ausführung des Unterprogramms UP, wobei sich ein Unterprogramm UP unter Verwendung einer vereinfachten BNF-Notation (BNF: Backus-Naur-Form) allgemein wie folgt darstellen lässt:
- <UP>:=: "DEF" <Name>{<Befehl>}"END"
- <Befehl>:=: [<Einzelbefehl>]|<UP>
- <Einzelbefehl>:=: arithmetischer Ausdruck|logischer Ausdruck|...|Bewegungsanweisung|Warteanweisung
- <Name>:=: A|...|Z|0|...|9

Bei dem Einzelbefehl EB kann es sich demnach um einen arithmetischen Ausdruck, einen logischen Ausdruck oder um Bewegungs- bzw. Warteanweisungen an einen Roboter handeln. Beim Befehl handelt es sich demnach um einen Einzelbefehl EB oder um ein Unterprogramm UP, wobei ein durch einen bestimmten Namen identifiziertes Unterprogramm UP wiederum eine Folge von Befehlen, d.h. Einzelbefehlen oder Unterprogrammen beinhaltet. Auf diese Weise kann ein Unterprogramm UP selbst wiederum (weitere) Unterprogramme aufrufen, auch in Form von Schleifenanweisungen, was zu einer Rekursionstiefe R>0 führt.

Im Anschluss an die Ausführungen des Unterprogramms UP in Schritt S2.1d erfolgt in Schritt S2.1e ein Abspeichern einer End-Systemzeit t_{E} für das Unterprogramm UP und die Rekursionstiefe R.

Die Laufzeitmessung endet, ggf. nach vorheriger Ausführung weiterer Schritte (gestrichelte vertikale Linien), in Schritt S3.

Ergibt die Abfrage in Schritt S2, dass es sich bei dem abzuarbeitenden Befehl gemäß der BNF-Notation um einen Einzelbefehl EB handelt (Schritt S2.2), so erfolgt zunächst in Schritt S2.2a ein Speichern einer Anfangs-Systemzeit tₛ mit Programmname "$" und Satznummer "#". Anschließend wird in Schritt S2.2b der Einzelbefehl EB ausgeführt, woraufhin in Schritt S2.2c eine End-Systemzeit t_{E} mit Programmname "$" und Satznummer "#" abgespeichert wird. Über den Programmnamen und die Satznummer lässt sich eine eindeutige Zuordnung von Systemzeiten und Einzelbefehl erreichen.

Auch im Falle der Laufzeitmessung an einem Einzelbefehl EB endet das erfindungsgemäße Verfahren ggf. nach Ausführung weiterer Zwischenschritte in Schritt S3.

Für die Erfassung der Messdaten für die Laufzeitmessung sind demnach erfindungsgemäß Programmname, Satznummer, Rekursionstiefe und Systemzeit bei Ein- und Austritt des Unterprogramms bzw. Beginn und Ende des Einzelbefehls notwendig. Ein Abspeichern ausschließlich von Einzelbefehlen wird zur Laufzeitmessung erst erforderlich, falls zwischenzeitlich das Programm durch Ändern, Einfügen oder Löschen von Programmzeilen verändert wird und dadurch der Bezug von Satznummer, Laufzeitmessung und Programmanweisung (Einzelbefehl) verloren gehen würde.

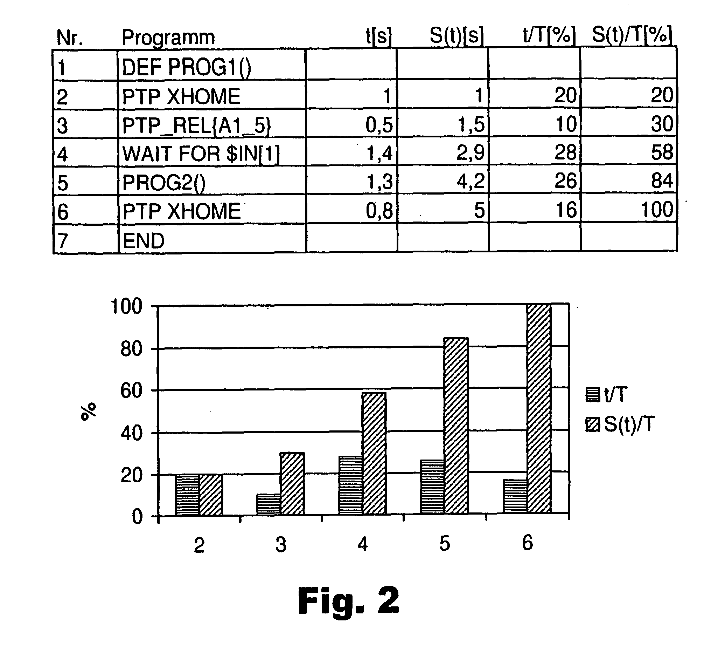

Die Fig. 2 zeigt anhand eines konkreten Ausführungsbeispiels die mit Hilfe des erfindungsgemäßen Verfahrens in einfacher und effizienter Weise für eine Optimierung des betreffenden Roboter-Steuerprogramms zur Verfügung stehenden Laufzeit-Daten. Die dargestellte Tabelle ordnet den aufgelisteten (Unter-)Programmen mit (Programm-)Namen "$" bestimmte Laufzeiten t zu, die sich aus einer Differenzbildung der gespeicherten Anfangs- und End-Systemzeiten gemäß der Fig. 1 ergeben. In den nachfolgenden Spalten der Tabelle sind die Laufzeiten kumuliert in absoluter Form bzw. einzeln und wiederum in kumulierter Form als prozentuale Anteile der Gesamtlaufzeit T=t₂+t₃+t₄+t₅+t₆ angegeben. Eine den letzten beiden Spalten der Tabelle entsprechende graphische Darstellung zeigt das in der Fig. 2 beinhaltete Balkendiagramm.

Mit den durch das erfindungsgemäße Verfahren gelieferten Laufzeit-Werten ist dem Anwender eine effiziente Möglichkeit zur Optimierung von Roboter-Steuerprogrammen an die Hand gegeben, die nach einer Inspektion, beispielsweise der graphischen Darstellung der Fig. 2, "per Hand" durch den Anwender vorgenommen werden kann, der durch das erfindungsgemäße Verfahren unmittelbar und in unverfälschter Weise Schwachstellen in der Programmierung, die sich in hohen Laufzeit-Anteilen für bestimmte (Unter-)Programme ausdrücken, aufgezeigt bekommt. Allerdings ist es im Zuge des erfindungsgemäßen Verfahrens auch möglich, dass bestimmte Optimierungsaufgaben automatisch durch eine der Laufzeitmessung nachgeschaltete Programmeinheit vorgenommen werden, beispielsweise durch ein Expertensystem, das Programme mit hohen Laufzeit-Anteilen, wie Programm Nr. 4 in der Tabelle der Fig. 2, erkennt und nach bestimmten vorzugebenden Regeln optimiert.

## Patentansprüche

1. Verfahren zum Bereitstellen von Laufzeitinformationen von Computerprogrammen zum Steuern von Industrierobotern (Roboter-Steuerprogramme), **dadurch gekennzeichnet, dass** die Laufzeit der Ausführung mindestens eines Einzelbefehls aufgrund der Systemzeit des Prozessors, auf dem das Programm ausgeführt wird, bestimmt und zusammen mit dem Einzelbefehl oder die Einzelbefehle charakterisierenden Informationen gespeichert wird.

2. Verfahren nach Anspruch 1, **dadurch gekennzeichnet, dass** der Zeitpunkt des Zugriffs auf einen dem mindestens einen Einzelbefehl zugeordneten Speicherbereichs eines Speichers und der Zeitpunkt der Beendigung des Zugriffs auf den Speicherbereich bestimmt und mit den mindestens einen Einzelbefehl charakterisierenden Informationen gespeichert wird.

3. Verfahren nach Anspruch 1 oder 2, **dadurch gekennzeichnet, dass** dem mindestens einen Einzelbefehl zugeordneter Speicherbereich, charakterisierende Information mit der Zeit der Ausführung des mindestens einen Einzelbefehls gespeichert wird.

4. Verfahren nach einem der vorangehenden Ansprüche, **dadurch gekennzeichnet, dass** nach Aufruf und vor Ausführung eines Einzelbefehls oder einer Folge von Einzelbefehlen (Unterprogramm) ein Zeitpunkt eines Zugriffs auf einen dem Einzelbefehl oder dem Unterprogramm zugeordneten Speicherbereich eines Programmspeichers eines das Programm ausführenden Computersystems in Form einer ersten Systemzeit durch das Computersystem selbst bestimmt wird, anschließend der Einzelbefehl oder das Unterprogramm ausgeführt wird und nach der Ausführung bei Beendigung des Zugriffs auf den zugeordneten Speicherbereich eine zweite Systemzeit des Computersystems durch dieses selbst bestimmt wird.

5. Verfahren nach einem der vorangehenden Ansprüche, **dadurch gekennzeichnet, dass** für eine Folge von Einzelbefehlen in Form eines Unterprogramms zusätzlich ein Wert einer Rekursionstiefe bestimmt wird.

6. Verfahren nach Anspruch 5, **dadurch gekennzeichnet, dass** eine Laufzeit des Einzelbefehls oder des Unterprogramms als Differenz der bestimmten Systemzeiten unter Berücksichtigung des Rekursionstiefen-Werts bestimmt wird.

7. Verfahren nach einem der Ansprüche 1 bis 6, **dadurch gekennzeichnet, dass** die bestimmten Systemzeiten und/oder eine zugehörige Speicheradresse und/oder der Rekursionstiefen-Wert in einem nicht flüchtigen Speicher abgelegt werden.

8. Verfahren nach einem der Ansprüche 1 bis 7, **dadurch gekennzeichnet, dass** die bestimmten Systemzeiten und/oder Speicheradressen und/oder Rekursionstiefen-Werte durch eine Programmeinheit zu Optimierungszwecken für das Roboter-Steuerprogramm verwendet werden.

9. Verfahren nach Anspruch 8, **dadurch gekennzeichnet, dass** im Zuge der Optimierung durch die Programmeinheit Vorschläge zu einer Umgestaltung des Roboter-Steuerprogramms ausgegeben und/oder automatisch umgesetzt werden.

## Claims

1. Method for providing execution time information of computer programs for controlling industrial robots (robot control programs), **characterized in that** the execution time of the execution of at least one single instruction is determined based on the system time of the processor on which the program is executed, and is stored together with the single instruction or with information characterizing the single instructions.

2. Method according to claim 1, **characterized in that** the point of time of the access to a memory area of a memory, which memory area is assigned to the at least one single instruction, and the point of time of the termination of the access to the memory area is determined and stored with the information characterizing the at least one single instruction.

3. Method according to claim 1 or 2, **characterized in that** information characterizing the memory area assigned to the at least one single instruction is stored with the time of the execution of the at least one single instruction.

4. Method according to one of the preceding claims, **characterized in that** after invocation and before execution of a single instruction or a sequence of single instructions (subprogram), a point of time of an access to a memory area of a program memory of a computer system executing the program, which memory area is assigned to the single instruction or the subprogram, is determined by the computer system itself in the form of a first system time, the single instruction or the subprogram is subsequently executed and, after the execution at the termination of the access to the assigned memory area, a second system time of the computer system is determined by the computer system itself.

5. Method according to one of the preceding claims, **characterized in that** additionally a value of a recursion depth is determined for a sequence of single instructions in the form of a subprogram.

6. Method according to claim 5, **characterized in that** an execution time of the single instruction or the subprogram is determined as a difference of certain system times, taking the recursion depth value into account.

7. Method according to one of claims 1 to 6, **characterized in that** the certain system times and/or a corresponding memory address and/or the recursion depth value are deposited in a non-volatile memory.

8. Method according to one of claims 1 to 7, **characterized in that** the certain system times and/or memory addresses and/or recursion depth values are used by a program unit for optimization purposes for the robot control program.

9. Method according to claim 8, **characterized in that** suggestions related to restructuring the robot control program are issued and/or automatically realized by the program unit in the course of the optimization.

## Revendications

1. Procédé pour fournir des informations concernant le temps d'exécution de programmes informatiques en vue de la commande de robots industriels (programmes de commande de robots), **caractérisé en ce que** le temps d'exécution de l'exécution d'au moins une commande simple est déterminé selon le temps système du processeur, sur lequel le programme est exécuté, et est mémorisé conjointement avec l'commande simple ou les informations caractérisant les instructions particulières.

2. Procédé selon la revendication 1, **caractérisé en ce que** le moment d'accès à une zone de mémoire d'une mémoire associée à au moins une commande simple et le moment de la suspension d'accès à la zone de mémoire est déterminé et est mémorisé avec les informations caractérisant la au moins une commande simple.

3. Procédé selon la revendication 1 ou 2, **caractérisé en ce qu'**une information caractérisant la zone de mémoire associée à la au moins une commande simple est mémorisée avec le temps d'exécution de la au moins une commande simple.

4. Procédé selon l'une des revendications précédentes, **caractérisé en ce que**, après l'appel et avant l'exécution d'une commande simple ou d'une suite d'instructions particulières (sous-programme), un moment d'accès à une zone de mémoire associée à l'commande simple ou au sous-programme d'une mémoire de programme d'un système informatique exécutant le programme sous la forme d'un premier temps système est déterminé par le système informatique lui-même, puis l'commande simple ou le sous-programme est exécuté et après l'exécution à la fin de l'accès à la zone de mémoire associée, un second temps système du système informatique est déterminé par ce dernier.

5. Procédé selon l'une des revendications précédentes, **caractérisé en ce que**, pour une suite d'instructions particulières sous la forme d'un sous-programme, une valeur d'une profondeur de récursion est déterminée en plus.

6. Procédé selon la revendication 5, **caractérisé en ce qu'**un temps d'exécution de l'commande simple ou du sous-programme est déterminé en tant que différence des temps système déterminés conformément à la valeur des profondeurs de récursion.

7. Procédé selon l'une des revendications 1 à 6, **caractérisé en ce que** les temps système déterminés et/ou une adresse de mémoire associée et/ou la valeur des profondeurs de récursion sont mémorisés dans une mémoire non volatile.

8. Procédé selon l'une des revendications 1 à 7, **caractérisé en ce que** les temps système déterminés et/ou les adresses de mémoire et/ou les valeurs des profondeurs de récursion sont utilisés grâces à une unité de programme dans des buts d'optimisation pour le programme de commande de robots.

9. Procédé selon la revendication 8, **caractérisé en ce que**, au cours de l'optimisation grâce à l'unité de programme, des propositions en vue d'une transformation du programme de commande de robots sont délivrées et/ou automatiquement modifiées.
